Europäisches Patentamt

European Patent Office

Office européen des brevets

(19)

(11) Veröffentlichungsnummer : **0 361 342 B1**

(12) **EUROPÄISCHE PATENTSCHRIFT**

(45) Veröffentlichungstag der Patentschrift :
**21.12.94 Patentblatt 94/51**

(21) Anmeldenummer : **89117625.7**

(22) Anmeldetag : **23.09.89**

(51) Int. Cl.⁵ : **H04B 10/14**

(54) Optischer Empfänger mit erweitertem Dynamikbereich.

(30) Priorität : **28.09.88 DE 3832857**

(43) Veröffentlichungstag der Anmeldung :
**04.04.90 Patentblatt 90/14**

(45) Bekanntmachung des Hinweises auf die
Patenterteilung :
**21.12.94 Patentblatt 94/51**

(84) Benannte Vertragsstaaten :
**CH DE ES FR GB IT LI NL SE**

(56) Entgegenhaltungen :
**WO-A-85/04997**
**DE-A- 3 633 984**
**PATENT ABSTRACTS OF JAPAN, Band 5, Heft
181, (E-83)[853], 20. November 1981; & JP-A-56
107 654 (NIPPON DENKI) 26-08-1981**

(56) Entgegenhaltungen :
**PATENT ABSTRACTS OF JAPAN, Band 10,
Heft 367, (E-462)[2424], 9. Dezember 1986; &
JP-A-61 163 738 (MATSUSHITA) 24-07-1986
PATENT ABSTRACTS OF JAPAN, Band 6, Heft
119, (E-166)[997], 3. Juli 1982; & JP-A-57 46 544
(FUJITSU) 17-03-1982**

(73) Patentinhaber : **Alcatel SEL
Aktiengesellschaft
Lorenzstrasse 10
D-70435 Stuttgart (DE)**

(72) Erfinder : **Reutter, Jörg
Josenhansstrasse 7
D-7000 Stuttgart 31 (DE)**
Erfinder : **Krause, Frank
Sachsenstrasse 69
D-7000 Stuttgart 40 (DE)**

(74) Vertreter : **Kugler, Hermann, Dipl.-Phys. et al
Alcatel SEL AG
Patent- und Lizenzwesen
Postfach 30 09 29
D-70449 Stuttgart (DE)**

EP 0 361 342 B1

## Beschreibung

Die Erfindung betrifft einen optischen Empfänger nach dem Oberbegriff des Patentanspruchs 1. Ein derartiger optischer Empfänger ist bekannt aus der DE-OS 36 33 984. Der Wechselstromkreis, der für den Fall der starken Gleichstromreduzierung dazu dient, die an der Photodiode entstehende Wechselspannung in einen in den Transimpedanzverstärker fließenden Wechselstrom umzusetzen, führt bei diesem bekannten optischen Empfänger von der Photodiode nach Masse unter Einbeziehung von Teilen des Gleichstromkreises der Photodiode.

Es ist Aufgabe der Erfindung, ausgehend von diesem bekannten optischen Empfänger einen verbesserten optischen Empfänger anzugeben.

Die Aufgabe wird wie im Patentanspruch 1 angegeben gelöst. Weiterbildungen ergeben sich aus den Unteransprüchen. Die Erfindung wird nun anhand der Zeichnungen beispielsweise näher erläutert.

Es zeigen:

Fig. 1      das Prinzipschaltbild des erfindungsgemäßen optischen Empfängers,

Fig. 2      das Kennlinienfeld einer typischen Photodiode zur Erläuterung der Erfindung und

Fig. 3      das Prinzipschaltbild eines Ausführungsbeispiels der Erfindung mit einer Transistorschaltung anstelle des variablen Widerstands $R_v$ aus Fig. 1.

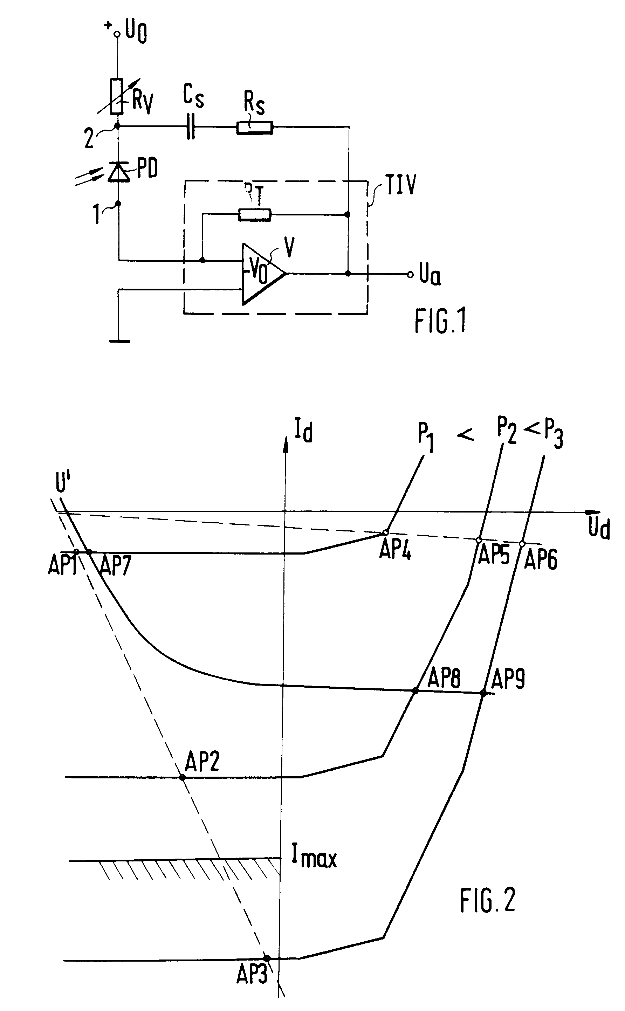

Der optische Empfänger nach Fig. 1 enthält wie der bekannte optische Empfänger als wesentliche Elemente eine Photodiode PD, eine Versorgungsspannung $U_O$ für die Photodiode PD und einen Transimpedanzverstärker, der mit einer gestrichelten Umrahmung versehen und mit TIV bezeichnet ist. Die Anode 1 der Photodiode PD ist direkt mit dem Eingang des Transimpedanzverstärkers TIV verbunden.

Der Transimpedanzverstärker kann in irgendeiner der bekannten Ausführungsformen aufgebaut sein, für die es charakteristisch ist, daß eine Verstärkerschaltung V mit dem Verstärkungsfaktor $-V_O$ durch einen Gegenkopplungswiderstand $R_T$ überbrückt ist. Er setzt den Photostrom der Photodiode PD in eine Ausgangsspannung $U_a$ um, die am ebenso bezeichneten Ausgang erscheint.

Mit dem eingangs genannten bekannten optischen Empfänger hat der in Fig. 1 gezeigte erfindungsgemäße weiterhin gemeinsam, daß im Gleichstromkreis der Photodiode zwischen deren Kathoden-Anschluß 2 und der Versorgungsspannungsquelle $U_O$ ein variabler Widerstand $R_V$ liegt. Dieser Widerstand dient, wie es in der oben genannten Druckschrift ausführlich beschrieben ist, dazu, für den Fall eines hohen Lichtpegels des auf die Photodiode auftreffenden Lichts den Gleichstromkreis der Photodiode zu begrenzen und damit den Gleichstromarbeitspunkt der Photodiode zu verändern.

Diese Erläuterung wird anhand der Fig. 2 kurz wiederholt. Dort sind für drei verschiedene Pegel des optischen Empfangssignals, $P_1 < P_2 < P_3$, die Kennlinien der Photodiode schematisch dargestellt, wobei $I_d$ und $U_d$ der Strom bzw. die Spannung der Photodiode ist. Ist der Widerstand im Gleichstromkreis der Photodiode ein ohmscher Widerstand, so verläuft $I_d$ in Abhängigkeit von $U_d$ nach einer Geraden, deren Steigung vom Wert des ohmschen Widerstandes abhängt. Die Schnittpunkte dieser Geraden mit den Kennlinien ergeben die Gleichstromarbeitspunkte für die Photodioden.

Aus Fig. 2 ist ersichtlich, daß eine Gerade, die flach verläuft und die Photodioden-Kennlinien in deren steil ansteigendem Teil schneidet, z.B. die Gerade durch Arbeitspunkte AP4, AP5 und AP6, auch bei hohen Lichtpegeln gewährleistet, daß der für den Transimpedanzverstärker maximal zulässige Strom $I_{max}$ nicht überschritten wird, wogegen bei einer $I_d/U_d$-Funktion, die durch Arbeitspunkte AP1, AP2 und AP3 verläuft, was bei einem geringen Wert des ohmschen Widerstandes der Fall ist, bei dem hohen Lichtpegel P3 ein unzulässiger Arbeitspunkt AP3 gegeben wäre.

Wie aus der eingangs genannten Druckschrift bekannt ist, geschieht die Umschaltung von den Arbeitspunkten AP1 bis AP3 auf die Arbeitspunkte AP4 bis AP6 durch Ändern des Werts des ohmschen Widerstandes von einem kleinen auf einen großen Wert. Im Falle des großen Widerstandes, d.h. der Arbeitspunkte AP4 bis AP6, ändert sich der Strom durch Photodiode bei Lichtpegelschwankungen kaum noch, sondern nur noch die Spannung $U_d$, so daß die Photodiode in dieser Betriebsart eine Wechselspannungsquelle ist.

Zum Umsetzen dieser Wechselspannung in einen Wechselstrom als Eingangsstrom des Transimpedanzverstärkers dient beim Stand der Technik ein Wechselstromkreis, der zum Teil im Gleichstromkreis der Photodiode liegt und von dort nach Masse führt. Hierin unterscheidet sich die Erfindung wesentlich vom Stand der Technik.

Erfindungsgemäß führt der Wechselstromkreis von dem Anschluß der Photodiode, der nicht mit dem Eingang des Transimpedanzverstärkers TIV verbunden ist, also dem Anschluß 2, zum Ausgang des Transimpedanzverstärkers. Er enthält, wie in Fig. 1 gezeigt, eine Impedanz bestehend aus einem ohmschen Widerstand $R_S$ und einem zu diesem in Reihe geschalteten Kondensator $C_S$, der dazu dient, den Gleichstromweg vom Wechselstromweg zu trennen. Der Kondensator $C_S$ kann je nach Strom- und Spannungsverhältnissen auch entfallen. Statt des ohmschen Widerstandes $R_S$ kann auch eine Impedanz, bestehend aus einem ohmschen Widerstand und einem parallelgeschalteten Kondensator oder auch ein komplizierterer aktiver oder passiver RLC-Vierpol vorhanden sein, wenn eine Entzerrung der Ausgangsspannung $U_a$ gewünscht ist.

In jedem Falle schließt die Verbindung von Anschluß 2 zum Ausgang des Transimpedanzverstärkers TIV einen Wechselstromkreis, der vom Masse-Anschluß des Transimpedanzverstärkers TIV über die Photodiode, die Impedanz $R_s$, $C_s$ und über die Ausgangsspannung $U_a$ zu Masse zurückführt.

Nachstehend wird erläutert, welche Bedeutung die Widerstände $R_V$ und $R_S$ im Hinblick auf den Dynamikbereich der neuen Schaltung haben, wobei vorausgesetzt ist, daß der Kondensator $C_S$ eine sehr große Kapazität hat, d.h. für Wechselstrom praktisch ein Kurzschluß ist.

Anhand von Ersatzschaltbildern läßt sich zeigen, daß für die neue Schaltung näherungsweise gilt:

$$U_a \approx - \frac{R_d}{\alpha + \dfrac{R_d}{R_T} + \dfrac{1}{V_O}} I_d \quad (1)$$

mit

$$\alpha = \frac{R_V}{R_V + R_S} \quad (2)$$

Darin ist:

$I_d$     die Stromstärke des durch die Photodiode fließenden Stromes,

$R_d$     der differentielle Innenwiderstand der Photodiode,

$R_T$     der Widerstandswert des Transimpedanzwiderstandes $R_T$,

$V_O$     der Verstärkungsfaktor der Verstärkerschaltung V,

$R_V$     der Widerstandswert des Widerstands $R_V$,

$R_S$     der Widerstandswert des Widerstands $R_S$, und

$U_a$     die Spannung (gegen Masse) des Ausgangs $U_a$ des Transimpedanzverstärkers.

Dem vorstehenden Ausdruck für $U_a$ liegt die Voraussetzung zugrunde, daß $R_S$ sehr klein gegenüber $R_T$ und daher $R_S/R_T$ fast gleich null ist. Dies ist aber keine Voraussetzung für das Funktionieren des neuen optischen Empfängers, sondern dient nur dazu, dessen Erläuterung zu erleichtern.

Die Ausgangsspannung $U_a$ hängt also von den variablen Größen $R_V$ und $R_d$ ab. Wie die bekannte Schaltung wird auch die neue Schaltung im Falle niedriger Lichtpegel (z.B. P1, P2) zweckmäßigerweise mit den Arbeitspunkten AP1 und AP2 betrieben. Diese Arbeitspunkte sind, wie oben erwähnt, durch einen sehr kleinen Wert $R_V$ vorgegeben. Andererseits ist der differentielle Widerstand $R_d$ der Photodiode

$$R_d = \frac{dU_d}{dI_d}$$

bei diesen Arbeitspunkten sehr groß, weil die Photodioden-Kennlinien sehr flach verlaufen. Unter diesen Bedingungen ($R_V$ sehr klein, $R_d$ sehr groß) wird aus (1) näherungsweise

$$U_a \approx R_T \cdot I_d \quad (3)$$

Das heißt, daß auch die neue Schaltung näherungsweise die Funktion des bekannten optischen Empfängers hat, wenn man, wie bei allen "normalen" Transimpedanzempfängern, $R_V$ sehr klein macht.

Wählt man aber, wiederum gemäß dem Prinzip des erwähnten bekannten optischen Empfängers, um zu vermeiden, daß der Transimpedanzempfänger bei hohen Lichtpegeln übersteuert, $R_V$ so groß, daß man Arbeitspunkte, z.B. AP4 bis AP6, erhält, die in den steil ansteigenden Bereichen der Diodenkennlinien liegen, so liegen folgende Verhältnisse vor: Der differentielle Innenwiderstand $R_d$ ist bei diesen Arbeitspunkten sehr klein, so daß unter den bestehenden Bedingungen ($R_V$ sehr groß und $R_d$ sehr klein) die Gleichung (1) näherungsweise übergeht in:

$$U_a \approx R_d \cdot I_d \quad (4)$$

da $\alpha \approx 1$     und $\dfrac{R_d}{R_T} \ll 1$

und meistens auch     $\dfrac{1}{V_O} \ll 1$

ist.

Zu Gleichung (4) ist zu bemerken, daß $R_d$ eine Funktion von $I_d$ ist. Aus der Gleichung der Kennlinie der Photodiode kann man nämlich ableiten, daß

$$R_d = \frac{1}{m} \cdot \frac{U_T}{I_d} \quad (5)$$

ist. Somit ist das Produkt $R_d \cdot I_d$ konstant, nämlich gleich $U_T/m$, wobei $U_T$ die sogenannte Temperaturspannung der Photodiode und m ein Korrekturfaktor ist, der die Abweichung von der einfachen Shockley'schen Diodentheorie berücksichtigt, vgl. Lehrbuch von U. Tietze und CH. Schenk "Halbleiter-Schaltungstechnik", achte, überarbeitete Auflage, Springer-Verlag, Berlin, Heidelberg, New York, London, Paris, Tokio 1986, S. 24.

Aus der bisherigen Beschreibung folgt, daß es durch eine solche Veränderung des Widerstandes $R_V$, die die Arbeitspunkte in die steil ansteigenden Bereiche der Kennlinien verlegt, möglich ist, die Ausgangsspannung des Transimpedanzverstärkers auf einen konstanten Wert zu beschränken, so daß weder der Transimpedanzverstärker TIV noch die nachfolgenden Schaltungen übersteuert werden. Es läßt sich zeigen, daß mit der bekannten Schaltung eine Begrenzung der Ausgangsspannung auf einen derart niedrigen Wert nicht erreichbar ist, ohne daß Nachteile entstehen.

Es stellt sich nun die Frage, auf welche Weise man in einer praktischen Realisierung den Widerstand $R_V$ derart ändert, daß bei hohen Lichtpegeln die bisher beschriebene Arbeitspunktverlegung erreicht wird.

Zunächst ist zu sagen, daß dies auch hier wie bei der bekannten Schaltung geschehen kann, nämlich durch wahlweises Einschalten eines geeigneten Widerstandes aus einem größeren Vorrat von Widerständen, je nach Anwendungsfall und durch Umschalten vom einen auf den anderen Widerstand, wenn mit hohen Lichtpegeln zu rechnen ist. Auch ein kontinuierlich steuerbarer Widerstand $R_V$ und eine Regelschaltung, die seinen Widerstand entsprechend dem momentan vorhandenen Lichtpegel der erläuterten Weise regelt, ist geeignet, die erforderliche Strombegrenzung zu bewirken.

Ideal ist jedoch ein Element, das bei steigendem Lichtpegel von selbst den Gleichstrom im Gleichstromkreis der Photodiode begrenzt und somit von selbst die beschriebene Verlegung der Arbeitspunkte bewirkt. Gemäß einer wesentlichen Weiterbildung der Erfindung ist hierzu anstelle des Widerstandes $R_V$ aus Fig. 1 eine Schaltung geeignet, deren Strom-Spannungs-Kennlinie nach Art der Ausgangskennlinie eines bipolaren Transistors bei konstantem Basisstrom verläuft.

Die Ausgangskennlinie eines bipolaren Transistors bei konstantem Basisstrom verläuft bekanntlich so, daß der Strom zunächst mit der Spannung steil ansteigt bis zu einem bestimmten Wert und dann nahezu konstant bleibt. In diesem Bereich des konstant verlaufenden Stroms ist die Transistorschaltung eine nahezu ideale Stromquelle. Solche Transistorschaltungen und ihre Ausgangskennlinien sind in der Literatur vielfach beschrieben, z.B. im oben zitierten Lehrbuch, S. 28, 29.

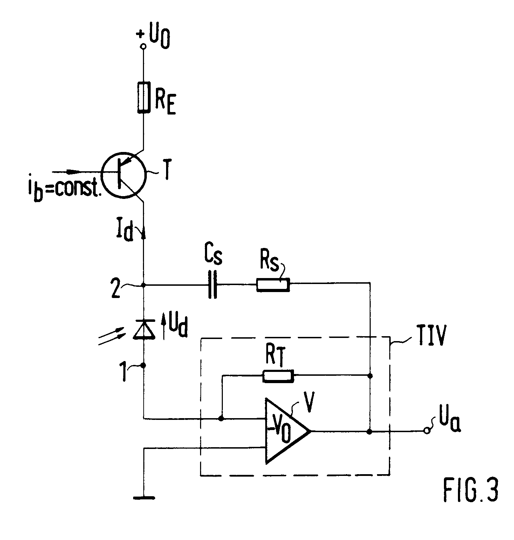

In Fig. 3 ist die erfindungsgemäße Schaltung gezeigt, die sich von der Schaltung nach Fig. 1 durch eine schematisch angedeutete Transistorschaltung anstelle des Widerstandes $R_V$ unterscheidet. Diese besteht aus einem bipolaren pnp-Transistor T, dessen Emitter über einen Emitterwiderstand $R_E$ mit der Versorgungsspannungsquelle $U_O$ und dessen Kollektor mit dem Anschluß 2 der Photodiode verbunden ist. Durch nicht gezeigte Mittel ist dafür gesorgt, daß der Basisstrom $I_b$ konstant ist.

Durch einfache Überlegungen unter Berücksichtigung der vorliegenden Strom- und Spannungsrichtungen ergibt sich, daß infolge dieser Transistorschaltung der Strom $I_d$ mit zunehmender Diodenspannung $U_d$ in negativer Stromrichtung zunächst stark zunimmt, ähnlich wie die steile Gerade durch die Punkte AP1 bis AP3, jedoch bald flacher und mehr und mehr konstant verläuft. Ein solcher Verlauf ist in Fig. 2 eingezeichnet, wobei sich Arbeitspunkte AP7 bis AP9 ergeben.

Die Transistorschaltung begrenzt somit den Strom $I_d$ derart, daß Arbeitspunkte, bei denen $I_{max}$ überschritten wäre, nicht entstehen. Ohne irgendwelche Steuer- oder Schaltvorgänge ist dafür gesorgt, daß bei hohen Lichtpegeln die Arbeitspunkte im Bereich des steilen Anstiegs der Kennlinien liegen (AP8, AP9). In anderen Worten: mit zunehmendem Lichtpegel nimmt der Diodenstrom $I_d$ nicht zu, wie dies bei der Geraden durch die Arbeitspunkte AP1 bis AP3 der Fall wäre, sondern der Strom wird auf einen akzeptablen Wert begrenzt, und die Spannung an der Photodiode wird vom negativen Bereich in den positiven Bereich invertiert.

Jede Schaltung, die dieses leistet, ist zur Realisierung der Erfindung geeignet. Die in Fig. 3 gezeigte Transistorschaltung, die nur eine Prinzipschaltung ist, ist nur ein Beispiel hierfür.

Beispielsweise sind alle Varianten der im oben genannten Lehrbuch S. 59 bis S. 63 angegebenen Konstantstromquellen einschließlich der Stromspiegel geeignet und auch die auf den Seiten 356 bis 364 gezeigten Stromquellen, wobei der Widerstand im Wechselstromkreis durch ein zusätzliches Schaltungselement bei geringem Lichteinfall erniedrigt werden kann, z.B. bei der Schaltung nach Abb. 13.11 auf S. 357 durch einen parallel zu $R_1$ geschalteten Widerstand.

Schließlich ist darauf hinzuweisen, daß die anhand von Fig. 2 beschriebene Arbeitspunktverlegung auch durch Änderung eines weiteren Parameters bewirkt werden kann, nämlich durch Änderung der Vorspannung $U_O$. Diese bestimmt nämlich, an welcher Stelle auf der Abszisse eine durch einen ohmschen Widerstand hinsichtlich ihrer Steigung festgelegte Gerade die Abszisse schneidet, und dies unabhängig von der Steigung der Geraden. Dieser Schnittpunkt ist in Fig. 2 mit U' bezeichnet. Anhand der Fig. 2 ist leicht einzusehen, daß durch eine Steuerung, die mit steigenden Lichtpegeln den Punkt U' der durch AP1 bis AP3 verlaufenden Geraden und damit diese Gerade selbst nach rechts verschiebt, es erreichbar ist, daß Arbeitspunkte wie AP3, bei denen $I_{max}$ überschritten wird, vermieden werden.

Es ist also auch möglich, die Dynamikbereichserweiterung bei festem Widerstand $R_V$, der einen sehr niedrigen Wert hat, durch Änderung der Vorspannung zu erreichen, was einfacher zu realisieren ist als die Steuerung eines Widerstandes. Im einfachsten Falle wird, entsprechend der oben angedeuteten Veränderung des Widerstandes $R_V$, jeweils eine geeignete Spannung aus einem Vorrat von Spannungen als Vorspannung angeschaltet.

Selbstverständlich ist es auch möglich, die Änderung des Widerstandes mit der Änderung der Vorspannung, kontinuierlich oder diskontinuierlich, zu kombinieren, oder auch die Vorspannung $U_O$ bei der in Fig. 3 als Strombegrenzungselement vorhandenen Transistorschaltung zu ändern.

Abschließend wird noch auf folgende Varianten hingewiesen:

Das strombegrenzende Element im Gleichstromkreis der Photodiode, also der Widerstand $R_V$ oder die Transistorschaltung, könnte prinzipiell auch auf der anderen Seite der Photodiode PD im Gleichstromkreis liegen.

In der gezeigten Anordnung nach Fig. 1 kann zwischen $R_V$ und den Anschluß 2 der Photodiode eine Induktivität geschaltet werden, um den Einfluß von Streukapazitäten von $R_V$ auf die Gesamtschaltung zu verringern.

## Patentansprüche

1. Optischer Empfänger mit einer Photodiode und einem Transimpedanzverstärker, wobei die Photodiode in einem Gleichstromkreis zwischen einer Versorgungsspannungsquelle und dem Eingang des Transimpedanzverstärkers liegt, mit einem den Gleichstrom im Gleichstromkreis begrenzenden Element und mit einem Wechselstromkreis, der von der Photodiode als Wechselspannungsquelle gespeist wird und eine Impedanz enthält, welche die Wechselspannung der Photodiode in einen in den Transimpedanzverstärker fließenden Wechselstrom umsetzt,
   **dadurch gekennzeichnet**, daß der Wechselstromkreis den Anschluß (2) der Photodiode (PD), der nicht mit dem Eingang des Transimpedanzverstärkers (TIV) verbunden ist, an den Ausgang ($U_a$) des Transimpedanzverstärkers koppelt

2. Optischer Empfänger nach Anspruch 1, dadurch gekennzeichnet, daß die Impedanz ($R_s$) ein ohmscher Widerstand ($R_s$) ist.

3. Optischer Empfänger nach Anspruch 1, dadurch gekennzeichnet, daß die Impedanz eine Reihenschaltung aus einem Kondensator ($C_s$) und einem ohmschen Widerstand ($R_s$) ist.

4. Optischer Empfänger nach Anspruch 2 oder 3, dadurch gekennzeichnet, daß dem ohmschen Widerstand ($R_s$) ein Kondensator parallel geschaltet ist

5. Optischer Empfänger nach einem der vorstehenden Ansprüche, dadurch gekennzeichnet, daß das den Gleichstrom im Gleichstromkreis begrenzende Element eine im Gleichstromkreis liegende nichtlineare Schaltung (T, $R_E$) ist, deren Strom-Spannungs-Kennlinie nach Art der Ausgangskennlinie eines bipolaren Transistors bei konstantem Basisstrom verläuft.

6. Optischer Empfänger nach einem der Ansprüche 1 bis 4, dadurch gekennzeichnet, daß das den Gleichstrom im Gleichstromkreis begrenzende Element ein im Gleichstromkreis liegender Widerstand und eine Schaltung zur Steuerung der Spannung der Vorspannungsquelle ist

7. Optischer Empfänger nach einem der Ansprüche 1 bis 4, dadurch gekennzeichnet, daß das den Gleichstrom im Gleichstromkreis begrenzende Element ein im Gleichstromkreis liegender schalt- oder steuerbarer ohmscher Widerstand ist

## Claims

1. Optical receiver comprising a photodiode and a transimpedance amplifier, with the photodiode contained in a direct-current circuit between a supply-voltage source and the input of the transimpedance amplifier, and further comprising an element limiting the direct current in the direct-current circuit and an alternating-current circuit fed from the photodiode, which acts as an AC voltage source, and containing an impedance which converts the alternating voltage of the photodiode into an alternating current flowing into the transimpedance amplifier,
   **characterized in** that the alternating-current circuit couples the terminal (2) of the photodiode (PD) which is not connected to the input of the transimpedance amplifier (TIV) to the output ($U_a$) of the transimpe-

dance amplifier.

2. An optical receiver as claimed in claim 1, characterized in that the impedance ($R_s$) is a resistor ($R_s$).

3. An optical receiver as claimed in claim 1, characterized in that the impedance is a series combination of a capacitor ($C_s$) and a resistor ($R_s$).

4. An optical receiver as claimed in claim 2 or 3, characterized in that the resistor ($R_s$) is shunted by a capacitor.

5. An optical receiver as claimed in any one of the preceding claims, characterized in that the element limiting the direct current in the direct-current circuit is a nonlinear circuit (T, $R_E$) which is contained in the direct-current circuit and whose current-voltage characteristic resembles the output characteristic of a bipolar transistor at a constant base current.

6. An optical receiver as claimed in any one of claims 1 to 4, characterized in that the element limiting the direct current in the direct-current circuit is a resistor in the direct-current circuit and a circuit for controlling the voltage of the bias source.

7. An optical receiver as claimed in any one of claims 1 to 4, characterized in that the element limiting the direct current in the direct-current circuit is a switchable or controllable resistor in the direct-current circuit.


**Revendications**

1. Récepteur optique comportant une photodiode et un amplificateur d'adaptation d'impédance, dans lequel la photodiode se trouve dans un circuit de courant continu entre une source de tension d'alimentation et l'entrée de l'amplificateur d'adaptation d'impédance, comportant aussi un élément limitant le courant continu dans le circuit de courant continu ainsi qu'un circuit de courant alternatif qui est alimenté par la photodiode en tant que source de tension alternative et qui contient une impédance qui convertit la tension alternative de la photodiode en un courant alternatif qui passe dans l'amplificateur d'adaptation d'impédance,

   caractérisé par le fait que le circuit de courant alternatif couple la borne (2) de la photodiode (PD), qui n'est pas reliée à l'entrée de l'amplificateur d'adaptation d'impédance (TIV), à la sortie ($U_a$) de l'amplificateur d'adaptation d'impédance.

2. Récepteur optique selon la revendication 1, caractérisé par le fait que l'impédance ($R_s$) est une résistance ohmique ($R_s$).

3. Récepteur optique selon la revendication 1, caractérisé par le fait que l'impédance est un circuit de série composé d'un condensateur ($C_s$) et d'une résistance ohmique ($R_s$).

4. Récepteur optique selon la revendication 2 ou 3, caractérisé par le fait qu'un condensateur est monté en parallèle à la résistance ohmique ($R_s$).

5. Récepteur optique selon l'une des revendications précédentes, caractérisé par le fait que l'élément limitant le courant continu dans le circuit de courant continu est un circuit (T, $R_E$) non linéaire, situé dans le circuit de courant continu, dont la caractéristique courant-tension a l'allure de la caractéristique de sortie d'un transistor bipolaire à courant de base constant.

6. Récepteur optique selon l'une des revendications 1 à 4, caractérisé par le fait que l'élément limitant le courant continu dans le circuit de courant continu est une résistance située dans le circuit de courant continu et un circuit de commande de la tension de la source de prétension.

7. Récepteur optique selon l'une des revendications 1 à 4, caractérisé par le fait que l'élément limitant le courant continu dans le circuit de courant continu est une résistance ohmique, située dans le circuit de courant continu et pouvant être commutée ou commandée.

FIG.1

FIG.2

7

FIG.3